# EUROPÄISCHE PATENTSCHRIFT

(11) **EP 0 992 185 B1**
(45) Veröffentlichungstag und Bekanntmachung des Hinweises auf die Patenterteilung: **10.08.2005**
(21) Anmeldenummer: 99118933.3
(22) Anmeldetag: 25.09.1999
(51) Int. Cl.: A01B 69/00, A01D 41/12

(54) **Lenkautomatik mit Ultraschall-Ortungsvorrichtung**
Ultra-sound locating automatic steering system
Système automatique de direction à localisation ultrasonore

(30) Priorität: 05.10.1998 DE 19845666
(43) Veröffentlichungstag der Anmeldung: 12.04.2000
(73) Patentinhaber: CLAAS Selbstfahrende Erntemaschinen GmbH, 33428 Harsewinkel (DE)
(72) Erfinder: Huster, Jochen, 33330 Gütersloh (DE); Diekhans, Norbert, Dr., 33335 Gütersloh (DE)

(56) Entgegenhaltungen:
- EP-A- 0 732 043
- EP-A- 0 732 046
- EP-A- 0 770 320
- GB-A- 1 371 276
- US-A- 3 952 828

## Beschreibung

Die Erfindung betrifft eine Ortungsvorrichtung für eine Bearbeitungskante, insbesondere eine Erntegutkante, deren Ortungssignal als eine Lenkstellgröße einer elektrisch gesteuerten Lenkvorrichtung einer Landmaschine zugeführt ist, mit einer ersten aus einem Sender und einem Empfänger bestehenden Teilortungsvorrichtung, dessen Reflexionsgebiet maßgeblich auf dem noch nicht bearbeiteten, insbesondere nicht abgeernteten, Feld liegt und mit einer zweiten aus einem weiteren Sender und einem weiteren Empfänger bestehenden Teilortungsvorrichtung, deren weiteres Reflexionsgebiet die Bearbeitungskante beidseitig überlappend ausgerichtet ist, wobei das Empfangssignal der zweiten Teilortungsvorrichtung mit dem Empfangssignal der ersten Teilortungsvorrichtung bezugsmäßig und normierend verknüpft zur Erzeugung der Lenkstellgröße dient.

Eine derartige Ortungsvorrichtung zur Lenkungsregelung ist aus der DE 195 08 941 A1 bekannt. Bei dieser dient eine dritte Teilortungsvorichtung, deren Sender und Empfänger auf das bearbeitete Feld gerichtet sind, zur Erzeugung einer weiteren Bezugsgröße und Normierungsgröße, was jedoch bei wechselnder Reflexionseigenschaft des bearbeiteten Feldes, z.B. durch unterschiedlich auf den Stoppeln abgelagertes Stroh, oder wenn der Feldrain im Reflexionsgebiet liegt, zu großen Signalverwerfungen und damit unerwünscht unstabilem Lenkverhalten führt. Die Bündelung und Ausrichtung der verschiedenen Teilvorrichtungen war so ausgebildet, daß deren Reflexionsgebiete weitgehend voneinander unabhängig waren und kein Übersprechen auftrat.

Weiterhin sind aus der DE 195 08 942 A1 verschiedene Ortungsvorrichtungen zur Lenkungsregelung bekannt, von denen die eine mit zwei divergierenden eng gebündelten Lichtstrahlen arbeitet, von denen in der ausgeregelten Stellung je einer auf das bearbeitete und einer auf das unbearbeitete Feld fällt und deren Echos entsprechend ihrer Laufzeiten bei Abweichungen zu einer Zweipunktregelung genutzt werden, was jedoch eine unerwünscht pendelnde Lenkung entlang des Sollweges erbringt. Außerdem ist dort eine Ultraschallortungsvorrichtung zur Lenkungsregelung geoffenbart, die mit einer einzigen Ultraschall-Sender-Empfängerkombination arbeitet, deren Reflexionsgebiet die Bearbeitungskante beidseitig überlappt. Diese Vorrichtung nutzt die verschiedenen Laufzeiten der Echos, die vom hochstehenden Getreide bzw. dem niedrigen Stoppelfeld kommen. Ist das Erntegut abwechselnd hoch stehend und flach liegend oder ist es niedrig und sind die Halme oder Ähren wechselnd gerichtet, ist eine Diskriminierung des Echos vom Stoppelecho nicht möglich und die Lenkung kommt außer Kontrolle, da eine geeignete Bezugsgröße fehlt.

Es ist Aufgabe der Erfindung, die eingangs bezeichnete Vorrichtung so zu verbessern, daß sie auch dann eine gleichmäßige Regelung erbringt, wenn das unbearbeitete Feld einen wechselnden Reflexionsgrad aufweist.

Die Lösung besteht darin, daß die beiden Reflexionsgebiete der beiden Teilortungsvorrichtungen sich teilweise überlappen.

Vorzugsweise sind die beiden Sender gleichzeitig mit einem Sendeimpuls angesteuert, wodurch die beiden Empfänger demgemäß jeweils von beiden Sendern kommende vom unbearbeiteten Feld reflektierte Teilempfangssignale überlagert aufnehmen.

Es hat sich für einen Mähdrescher als günstig erwiesen, zwei Teilortungsvorrichtungen so anzuordnen, daß eine die mit Ähren besetzte Oberfläche des Getreidefeldes und eine zweite die Getreidekante überlappend anvisiert, wobei das Signal der ersten Teilortungsvorrichtung jeweils die Normierung bestimmt und die Bezugsgröße liefert und der niedrigere Signalanteil des zweiten Teilortungssensors der von dem schmaleren näherliegenden Bereich des stehenden Erntegutes stammt, normiert zum Lenkstellsignal weiterverarbeitet wird.

Vorteilhaft liegen die ortungsmäßig erfaßten Bereiche des Stoppelfeldes und des Getreidefeldes jeweils so weit vor der Erntemaschine, daß das aus den einzelnen Signalteilen erzeugte genormte Ortungssignal vermöge der Kompensationseffekte nur eine geringe Abhängigkeit von dem Durchfahren von Bodenunebenheiten, insbesondere Bodenwellen, und von Neigungs- und Kippbewegungen der Landmaschine oder des Schneidwerkvorsatzes aufweist.

Die Ortungsteilvorrichtung, welche die Getreidekante abtastet, ist vorteilhaft so eingerichtet, daß sie einen Bereich erfaßt, der mehrere Meter vor dem Schneidwerk der Erntemaschine liegt, da diese andererseits an ihren rückwärtsgelegenen Rädern gelenkt wird und deshalb eine Abweichung vom vorgesehenen Fahrweg nur nach einem größeren zurückgelegten Fahrweg ausgeglichen werden kann.

Bei dieser Anordnung hat es sich als günstig erwiesen, das Ist-Signal des Radstellwinkels als weitere Eingangsgröße in die Regelvorrichtung einzuführen, so daß praktisch vorausschauend aus diesem Signal der spätere Weg der Erntemaschine berücksichtigt wird. Das normierte Ortungssignal und das Radstellwinkelsignal sind die Eingangssignale der Regelvorrichtung die die geeignete Lenksteuergröße bilden.

Es hat sich gezeigt, daß bei herkömmlichen Mähdreschern etwa 60% der Aufmerksamkeit des Fahrers für das Lenken der Maschine beansprucht wurde. Die Lenktätigkeit ist deshalb besonders anstrengend, da das Lenken mit den Hinterrändern eine relativ lange Vorhaltezeit benötigt, bis eine seitliche Lageänderung des Mähdreschers zur Getreidekante auftritt, und danach muß durch ein entsprechendes Gegensteuern wieder die Geradeausfahrt herbeiführt werden. Das automatische Lenken ermöglicht bei praktisch völliger diesbezüglicher Entlastung des Fahrers im allgemeinen ein schnelleres Fahren und eine annähernd vollständige Auslastung der Schneidwerksbreite bis auf einen Sicherheitsrestabstand von ca. 10 cm.

Die Teilortungsvorrichtungen sind Ultraschallsender-Empfängeranordnungen. Die Ortungssensoren weisen jeweils Fokussierungsmittel auf, die einen Raumwinkel erfassen, der eine Halbwertsbreite von etwa 7° und eine 90% Erfassungsweite von etwa 14° hat. Es hat sich vorteilhaft erwiesen, die Teilortungssensoren neben der seitlichen Kante des Schneidwerks in etwa 1,5 bis 2,5 m Höhe über dem Getreidebestand anzuordnen. Der erste Teilortungssensor ist mit seinem Sensorfeldbereich etwa bis an die Erntegutkante reichend schräg auf das Getreide gerichtet. Der Raumwinkel ergibt im jeweiligen Auftreff-Reflexionsgebiet einen erfaßten Bereich von etwa 0,5 m Durchmesser. Die beiden von den Teilortungsvorrichtungen erfaßten Reflexionsbereiche sind gegeneinander etwa um die Hälfte überlappend ausgerichtet. Dies ergibt sich bei einer seitlichen Divergenz der Achsen der nahe benachbart angeordneten Sender-Empfänger von etwa 5° , wenn die Teilortungsvorrichtungen direkt benachbart zueinander angeordnet sind.

Es hat sich als vorteilhaft erwiesen, die beiden UltraSchallsender gleichzeitig mit einem Impuls anzusteuern, so daß die Echos aus dem Überlappungsbereich der Reflexionszonen, der direkt an die Getreidekante anschließt, jeweils von beiden Sendern überlagert quasi gleichzeitig an den Empfängern eintreffen, was die Empfangssignalleistung bei moderater Sendeimpulsleistung erhöht.

Ein Teil der Reflexionssignale wird von dem bearbeiteten Feldbereich, insbesondere Stoppelfeld, ausgesandt. Diese Signalanteile treffen jedoch gewöhnlich zeitlich später am Empfänger ein und können damit von einer weiteren Auswertung augeblendet werden. Bei sehr flach liegendem Getreide ist eine zeitliche Diskrimination der Echos vom Getreide und von den Stoppeln nur unzureichend möglich. Hier ist es jedoch hilfreich, daß das dichte Lagergetreide ein wesentlich stärkeres Echo als die lockeren Stoppeln abgeben.

Die getreideseitige Ortungsvorrichtung nimmt voll das Echo des eigenen Senders und etwa ein halbes Echo vom Nachbarsender auf. Der Empfänger der die Getreidekante im Reflexionsgebiet hat, nimmt von dem ungemähten, etwa halben, Gebiet das Echo seines eigenen Senders und vom Nachbarsender ebenso etwa ein halbes Echo auf. Wird also die Soll-Größe des Empfangssignales dieses kombinierten Echos nach einer Normierung auf 2/3 des Empfangssignales des anderen Empfängers gesetzt, dessen Signal als 100%-Normierwert jeweils betrachtet wird, so können die jeweiligen Abweichungen von dieser Bezugsgröße unmittelbar als Stellsignale für die Lenkung genutzt werden oder einem komplexeren Regler zur weiteren Auswertung zugeführt werden.

Eine sehr hilfreiche Signalisierungsvorrichtung dient der Einstellung der Neigung der Ortungsvorrichtung der beiden Teilortungsvorrichtungen die in der vorgegeben divergierenden Achsenausrichtung vorzugsweise in einem Gehäuse untergebracht sind. Befindet sich die Ortungsvorrichtung in ihrer vorgesehenen Höhe in einem vorgegebenen Abstand über der Getreidekante, so müssen bei richtiger Ausrichtung erstes das frühe, vom stehendenn Getreide stammende, und das späte, vom Stoppelfeld stammende, Teilecho in vorgegebenen, versetzten Zeitfenstern auftreten und zweitens die beiden frühen zu korrelierenden Echosignale in einem vorgegebenen Toleranzfeld um das vorgegebene Größenverhältnis, z.B. von 1/2 bis 2/3 zu 1, stehen. Die Einhaltung der beiden genannten Kriterien werden im Testfall oder laufend überprüft und deren Einhaltung oder Nichteinhaltung signalisiert.

Es hat sich als günstig erwiesen, wenn die Ortungsvorrichtung zwischen einer Höhe von 1,5 m bis auf eine Höhe von 2,5 m verstellbar ist, wobei im einfachen Fall von Hand durch Auszug einer Teleskopstrebe die Höhenänderung in Stufen erfolgt oder komfortabel eine motorische Verstellung vorgesehen ist, die von der Bedienkanzel aus anzusteuern ist.

Die Grundeinstellung der Neigung der Ortungsvorrichtung läßt sich an einer Schellenklemmverbindung in einfacher Weise von Hand vornehmen. Vorzugsweise trifft die Sender- und Empfängerachse in 4 bis 6 m Entfernung auf den Boden oder die Stoppeloberfläche bei langen Stoppeln.

Vorteilhaft ist eine Verkopplung der Höheneinstellung der Ortungsvorrichtung mit einer Neigungseinstellung vorgesehen, die motorisch gesteuert sein kann, wie bereits dargelegt. Eine gesonderte motorische Neigungseinstellung erübrigt sich somit bei dieser kombinierten Stellvorrichtung.

Das Trägergestänge der Ortungsvorrichtung ist so weit seitlich der Haspel und diese so weit nach vorn überragend angeordnet, daß keine störenden Echobeeinflussungen vom Schneid- und Einzugsbereich auftreten.

Das Trägergestänge der Ortungsvorrichtung ist vorzugsweise derart als ein Gelenkviereck ausgebildet, daß sich die Neigung der Ortungsvorrichtung beim Anheben bzw. Absenken so mitverändert, daß bei größerer Höhe, die bei höherem Bestand gewählt wird, die Neigung der Ortungskeule steiler ist und so das Nahecho vom Bestand kommend und das Fernecho von den Stoppeln kommend ähnlich zeitlich beabstandet sind wie bei Niedriger Einstellung bei niedrigem Bestand.

Anhand der Figuren 1 bis 4 sind vorteilhafte Ausgestaltungen dargestellt.
- Fig. 1: zeigt ein Übersichtsbild eines Mähdreschers mit einer Lenkregelvorrichtung;
- Fig. 2: zeigt eine Seitenansicht zu Fig. 1;
- Fig. 3: zeigt eine Schalschema der Regelvorrichtung,
- Fig. 4: zeigt einen Querschnitt durch eine Vorrichtung.

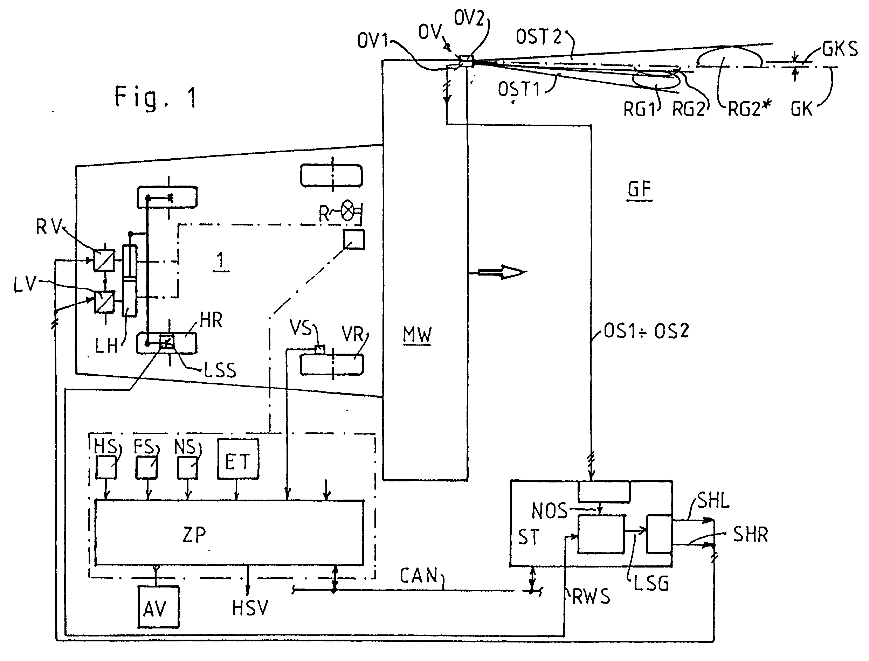

Figur 1 zeigt einen Mähdrescher (1) mit einem Mähwerk (MW), welcher an einer Getreidekante (GK) eines Getreidefeldes (GF) unter Einhaltung einer geringen Abweichung von einer vorgegebenen Getreidekantenseitenlage (GKS) automatisch geregelt entlangfahren soll. In der Höhe verstellbar oberhalb des Mähwerkes (MW) und frontseitig dazu ist eine Ortungsvorrichtung (OV) angeordnet, welche aus zwei Teilortungsvorrichtung (OV1, OV2) besteht, deren Ortungsstrahlenbereiche (OST1, OST2) auf das Stoppelfeld, das Getreidefeld (GF) und die Getreidekante (GK) auf jeweils unterschiedliche, teils überlappende Reflexionsgebiete (RG1, RG2, RG2*) orientiert sind, und deren empfangenen Ortungssignale (OS1, OS2) einer Regelvorrichtung (ST) zugeführt sind. Diese Ortungssignale werden zweckmäßig digitalisiert und in ein normiertes Ortungssignal (NOS) umgesetzt. Hierbei wird das erste Ortungssignal (OS1), das im wesentlichen von dem Getreidefeld (GF) herrührt, jeweils zur Definition des genormten Bereiches genutzt. Weiterhin wird ein Teilbetrag des ersten Ortungssignales (OS1) als Bezugswert für das zweite Ortungssignal (OS2) des zweiten Reflexionsteilgebietes (RG2), das sich im Nahbereich im Getreidefeld (GF) befindet, bestimmt.

Im vorgegebenen Beispiel ist die Regelvorrichtung (ST) über einen genormten Datenbus (CAN) mit einem Zentralprozessor (ZP) verbunden, über den auch die übrigen Steuerprozesse des Mähdreschers überwacht werden. Hierzu sind an dem Zentralprozessor (ZP) eine Eingabetastatur (ET) und eine Ausgabevorrichtung (AV) vorgesehen. Weiterhin nimmt der Zentralprozessor (ZP) von den Vorderrändern (VR) ein Geschwindigkeitssignal (VS) auf. Von der Regelvorrichtung (ST) wird die Lenkhydraulik (LH) mittels eines Linkssteuerventiles (LV) und eines Rechtssteuerventils (RV) elektromagnetisch angesteuert, deren hydraulischen Ausgänge die vorhandene Lenkhydraulik (LH) beaufschlagen, die den Einschlag der Hinterrädern (HR) bewirkt. An der Lenkvorrichtung wird ein Radstellwinkelsignal (RWS) abgenommen und der Regelvorrichtung (ST) zugeführt. Die Lenkstellventile (LV, RV) sind federbelastet selbstsicher ausgeführt, so daß sie bei Stromausfall geschlossen sind. In diesem Zustand wird die Lenkung unmittelbar über die bekannte hydraulische Steuerung vom Lenkrad (R) aus vorgenommen. In der Bedienerkabine sind außerdem ein Handschalter (HS), ein Fußschalter (FS) und ein Sicherheitsschalter (NS) angeordnet, deren Signale der Lenkstellventilanordnung aus Sicherheitsgründen zugeführt sind und der Regelvorrichtung (ST) zu deren Aktivierung bei Vollständigkeit dieser Signale zugänglich gemacht sind.

Es läßt sich erkennen, daß der Vorausabstand mit dem der Ortungstrahlenbereich (OST2) die Getreidekante (GK) abtastet, in etwa dem Abstand der Vorderräder (VR) von den Hinterrädern (HR) entspricht. Auf diese Weise ergibt eine Winkelabweichung der Mähdrescherachse zur Getreidekante, die sich in dem Ortungssignal als Teilkomponente darstellt, ein Äquivalent zu dem Radstellwinkelsignal. Diese jeweilige Winkelkomponente des Ortungssignalbereichs überlagert jeweils die Komponente der Seitenabweichung der Richtungsachse des Mähdreschers von dem vorgegebenen Sollweg, d.h. die Komponente, die die Getreidekantenseitenlage (GKS) jeweils erbringt.

Die Ortungsvorrichtung (OV) speist vorzugsweise ihr normiertes Ortungssignal (NOS) in die Regelvorrichtung (ST) ein. Die anderen Sensoren welche die übrigen Eingangsgrößen erzeugen, liegen im allgemeinen in dem Mähdrescher verteilt und geben ihre Signale über zugehörige Digitalisierer und Rechner weiter. Selbstverständlich können auch deren Normierer jeweils zugehörig unmittelbar dort im Sensorbereich installiert sein.

An den gelenkten Hinterrädern (HR) befindet sich ein Lenkradstellungssensor (LSS), dessen Radwinkelsignal (RWS) in geeigneter Weise als weiteres Eingangssignal für den Lenkregler benutzt wird. Hierbei hat sich als günstig erwiesen, das normierte Ortungssignal (NOS) und das auf das Normierungssignal bezogene Radstellwinkelsignal (RWS) kompensatorisch zu verknüpfen und das Ergebnis einem Toleranzvergleicher zuzuführen, welcher geeignete Lenkstellgrößen (LSG) erzeugt. Diese Lenkstellgröße (LSG) wird jeweils in ein linkes bzw. rechtes Hydraulikstellsignal (SHL, SHR) umgesetzt und dem Links- bzw. Rechtssteuerventil (LV, RV) zugeführt.

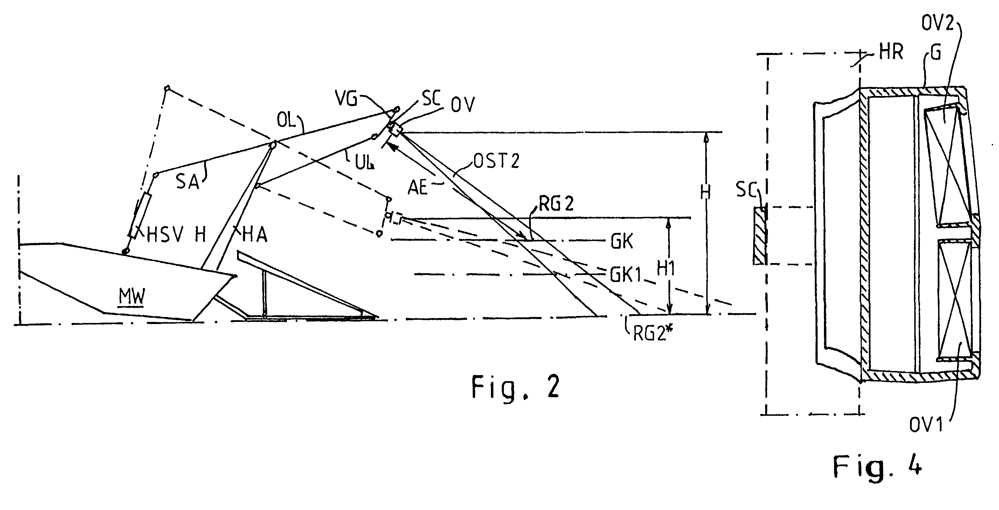

Figur 2 zeigt eine Seitenansicht des Mähwerkes (MW) des Mähdreschers (1) im Bereich der Getreidekante (GK) und des Ortungsstrahlbereiches (OST2). Die zugehörige Teilortungsvorrichtung (OV2) ist zusammen mit der weiteren Teilortungsvorrichtung auf einem Träger in ihrer Höhe (H1) zwischen 1,5 m und 2,5 m verstellbar über dem Boden im vorderen Bereich über den Ährenhebern des Mähwerkes angeordnet. Der Ortungsstrahlbereich (OST2) trifft schräg teils auf den Boden und die Stoppeln und teils auf den Bestand neben der Getreidekante (GK). Der Raumwinkel des Ortungsstrahlbereichs, der erfaßt wird, beträgt etwa 7° für 50% des Signalanteils und etwa 14° für 90% des Signalanteils.

Der Neigungswinkel ist so gewählt, daß das Reflexionsgebiet (RG2) auf dem Getreidebestand ein trennbar früheres Echo als das Bodenreflexionsgebiet (RG2*) erbringt. Außerdem soll sichergestellt sein, daß beim Überfahren eines Hügels ein sicher detektierbares Echo in beiden Reflexionsbereichen (RG2, RG2*) aufritt und die Schallkeule sich nicht in der Ferne verliert.

Bei einer niedrigeren Getreideoberkante GK1, ist der Ortungskopf in die Höhe H1 tiefer eingestellt. Seine Neigung ist etwas flacher so daß die beiden zugehörigen Reflexionsgebiete etwa die gleichen Echolaufzeiten erbringen und die Echosignale ähnliche Amplituden haben.

Da stets beide Teilortungsvorrichtung in gleicher Weise in der Höhe und zugehörigen Neigung verstellt werden, ergibt sich stets eine annähernd gleiche zeitliche und größenmäßige Relation der Empfangssignale.

Da sich die Echogebiete der beiden Teilortungsvorrichtungen teilweise überlappen und ansonsten unmittelbar aneinandergrenzen, stimmt deren Reflexionsverhalten weitgehend überein, unabhängig davon, ob eine starke Reflexion an zum Schallbündel hingerichteten vollen Ähren oder ob eine schwache Reflexion an wenigen vom Sensor weggeneigten Halmen auftritt. Aus diesem Grund dient das Echosignal der ersten Teilvorrichtung, das im wesentlichen von dem Getreidefeld stammt, als 100%-Normierungssignal für den frühen Signalanteil der zweiten Teilvorrichtung, der ebenfalls vom Getreidefeld stammt.

Das bei der vorgegebenen Ausrichtung der Ortungsvorrichtung zur Getreidekante, also bei korrekter Lenkung erwartete, frühe Echo des auf die Kante gerichteten Schallbündels hat etwa 1/2 bis 2/3 der Größe des Referenzechos vom anderen Empfänger. Die Echosignale werden während eines geeigneten zeitfensters integriert, um die Signalschwankungen, die durch die heterogene Struktur des Echogebietes auftreten, auszugleichen und diese besser vergleichbar zu machen. Vorzugsweise werden ein oberer und ein unterer Grenzwert für die relative Amplitudenhöhe der integrierten frühen Echosignale vorgegeben, und deren Über- bzw. Unterschreitungen zur Erzeugung der Lenkstellsignale genutzt.

In einer einfachsten Version der Lenkregelung werden diese Über- bzw. Unterschreitungssignale unmittelbar als Links- bzw. Rechtsstellsignal der elektromechanisch betätigten Ventile der Hydraulikzuleitungen des Lenkstellzylinders genutzt.

Bevorzugt wird in einer genauer arbeitenden zweistufigen Regelvorrichtung die Abweichung des normierten Echosignals von einem vorgegebenen Bruchteil des Referenzsignales einer nachgeordneten Reglerstufe als Soll-Signal zugeführt, der das Radwinkelsignal als das Ist-Signal zugeführt ist. Überschreitet oder unterschreitet das daraus resultierende Differenzsignal einen oberen oder unteren Schwellwert, so wird das jeweilige Überschreitungssignal zum differentiellen Nachsteuern des Hydraulikstellvorrichtung genutzt. Vorzugsweise ist die Hydraulikstellvorrichtung in bekannter Weise mit einer weiteren Unterregelvorrichtung mit einem Proportionalverhalten versehen.

Der Aufbau der Regelvorrichtung mittels eines digitalen Rechners ermöglicht die völlige Integration des Lenksystems in die übrige digitale Steuerung des Mähdreschers. Durch einfache Parametrisierung mittels einer Bedienung von der zentralen Bedienungskonsole der Erntemaschine werden die Parameter, insbes. die Schwellwerte, dem Prozessor vorgegeben; die Regelvorrichtung selbst ist in ihrer Grundstruktur völlig neutral.

Die Höhenstellvorrichtung zum Anheben der Ortungsvorrichtung (OV) in eine große Höhe (H) und und zum Absenken bis auf eine niedrige Höhe (H1) ist beispielhaft dargestellt. An dem feststehenden Haltearm (HA) ist ein Schwenkarm (SA) gelagert, der mit einer Höhenstellvorrichtung (HSV) verbunden ist und mit einem Schenkel ein Teil eines Gelenkvierecks bildet an dessen einen frontseitigen Glied (VG) die Ortungsvorrichtung (OV) montiert ist. Das Gelenkviereck ist so ausgestaltet, daß die Ortungsvorrich-tung (OV) an dem Glied (VG) mit seine Achse um so steiler nach unten geneigt ist, um so höher sie eingestellt ist, indem beispielsweise der untere Lenker (UL) kürzer als der obere Lenker (OL) im Gelenkviereck ist. In der gestrichelt gezeichneten unteren Lage ist der Schallkegel auf die niedrigere Getreidekante (GK1) gerichtet

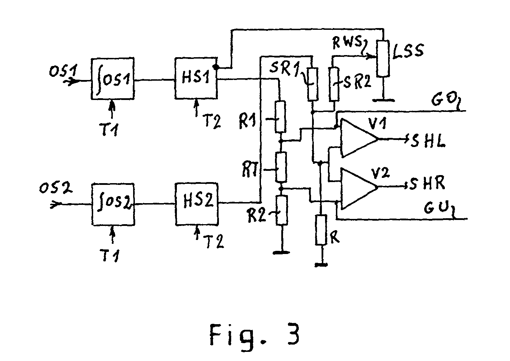

In Figur 3 ist eine Variante der Reglerschaltungen in Hardware-Ausführung dargestellt. Die beiden Ortungssignale (OS1, OS2) werden während eines Zeitfensters (T1),in der das frühe Echosignal erwartet wird, in den Integratorschaltungen (I1, I2) integriert, und dann werden die Integralwerte in Halteschaltungen (HS1, HS2) mit einem Takt (T2) übernommen.

Das Referenzsignal wird von der ersten Halteschaltung (HS1) kommend in einem dreistufigen Spannungsteiler (R1, RT, R2) geteilt, an dessen mittleren, den Toleranzbereich definierender, Widerstand (RT) ein relativ oberer und ein relativ unterer Grenzwert (GO, GU) abgegeben werden, die jeweils einen von zwei Vergleichern (V1, V2) am positiven bzw. negativen Eingang zugeführt werden, deren anderen Eingängen das Signal der zweiten Halteschaltung (HS2) zugeführt ist.

Diese Eingangsschaltung ist mit einem Widerstandsnetzwerk als eine Summierungsschaltung (R, SR1, SR2) ausgebildet, an deren zweiten Eingang (SR2) das Radwinkelsignal (RWS) geführt ist, das von dem Lenkstellsensor (LSS) abgegriffen ist, der mit dem negierten Referenzsignal aus der ersten Halteschaltung (HS1) als Referenzsignal gespeist ist. Somit wird in den Vergleichern (V1, V2) das Ortungssignal (OS2) vermindert um das Radwinkelsignal (RWS), das auf das erste Ortungssignal (OS1) normiert ist, mit den relativierten Schwellwerten (GO, GU) verglichen. Hat dieses Summensignal den oberen Grenzwert (GO) überschritten, was eine zu starke Ausrichtung in dem Bestand bedeutet, wird das Lenk-Steuersignal (SHL) vom ersten Vergleicher (V1) dem ersten Steuerventil (LV) zugeführt. Ist die untere Schwelle (GU) unterschritten, ist also die Ortungsvorrichtung zu sehr in das Stoppelfeld gerichtet, gibt der andere Vergleicher (V2) das andere Lenksteuersignal (SHR) an das andere Steuerventil (RV) ab. Der Radstellwinkel wird also dem Ortungsabweichungsmaß proportional nachgeführt.

Die Höhenstellvorrichtung (HSV) kann, wie gezeichnet, eine Längenverstellvorrichtung sein oder eine Winkelstellvorrichtung am Ende des Haltearmes (HA) sein.

Die Einstellverhältnisse von Höhe und Neigung der Ortungsvorrichtung sind so gewählt, daß das erste Echo von dem oben liegenden Reflexionsgebiet (RG2) etwa im gleichen Zeitraum unabhängig von der Einstellung eintrifft und das bodenseitige Reflexionsgebiet (RG2*) stets mindestens einen Abstand (AE) vom Ortungskopf (OV) aufweist, der deutlich größer ist als der weiteste Abstand des höheren Reflexionsgebietes (RG2), damit das bodenseitige Echo zeitlich ausgeblendet werden kann.

Figur 4 zeigt einen Querschnitt durch die Ortungsvorrichtung (OV), die an einem horizontalen Halterohr (HR) mit einer Schelle (SC) lösbar verschwenkbar befestigt ist. Die beiden Teilortungsvorrichtungen (OV1, OV2) sind leicht voneinander divergierend in ein Gehäuse (GH) eingebaut.

## Patentansprüche

1. Ortungsvorrichtung (OV) für eine Bearbeitungskante, insbesondere eine Erntegutkante (GK), deren Ortungssignal als eine Lenkstellgröße (LSG) einer elektrisch gesteuerten Lenkvorrichtung (RV, LV, LH) einer Landmaschine zugeführt ist, mit einer ersten aus einem Sender und einem Empfänger bestehenden Teilortungsvorrichtung (OV1), dessen Reflexionsgebiet (RG1) maßgeblich auf dem noch nicht bearbeiteten, insbesondere nicht abgeernteten, Feld (GF) liegt und mit einer zweiten aus einem weiteren Sender und einem weiteren Empfänger bestehenden Teilortungsvorrichtung (OV2), deren anderes Reflexionsgebiet (RG2, RG2*) die Bearbeitungskante (GK) beidseitig überlappend ausgerichtet ist, wobei das Empfangssignal (0S2) der zweiten Teilortungsvorrichtung (OV2) mit dem Empfangssignal (OS1) der ersten Teilortungsvorrichtung (OV1) bezugsmäßig und normierend verknüpft zur Erzeugung der genannten Lenkstellgröße (LSG) dient,
**dadurch bekennzeichnet, daß** die beiden Reflexionsgebiete (RG1, RG2) der beiden Teilortungsvorrichtungen (OV1, OV2) sich teilweise überlappen.

2. Ortungsvorrichtung nach Anspruch 1, **dadurch gekennzeichnet, daß** die beiden Teilortungsvorrichtungen (OV1, OV2) horizontal etwa 5° divergierend dicht nebeneinander angeordnet sind und sie einen 50%-Empfangsintensitätsbereich mit einem Öffnungswinkel von etwa 7° aufweisen.

3. Ortungsvorrichtung nach einem der vorstehenden Anspräche, **dadurch gekennzeichnet, daß** sie an einem Haltearm (HA) mit einem Schwenkarm (SA) höhenverstellbar frontseitig der Bearbeitungsvorrichtung, insbes. eines Mähwerkes (MW), angeordnet ist.

4. Ortungsvorrichtung nach Anspruch 3, **dadurch gekennzeichnet, daß** an dem Schwenkarm (SA) eine motorische Höhenverstellvorrichtung (HSV) angeordnet ist.

5. Ortungsvorrichtung nach Anspruch 2 oder 3, **dadurch gekennzeichnet, daß** sie mittels eines Gelenkvierecks (SA, OL, UL, VG) an dem Schwenkarm (SA) und dem Haltearm (HA) befestigt ist, dessen Glieder (SA, VG) eine derart unterschiedliche Länge aufweisen, daß der Ortungsvorrichtung (OV) um so steiler nach unten gerichtet ist, je höher sie eingestellt ist.

6. Ortungsvorrichtung nach Anspruch 5, **dadurch gekennzeichnet, daß** sie bei einer Höhenverstellung stets annähernd so geneigt ist, daß die Sender- und Empfängerachse das Erntegut in annähernd gleicher Entfernung (AE) trifft und ein Echo von dort zeitlich deutlich beabstandet zu einen späteren Echo vom tiefliegenden Reflexionsgebiet (RG2*) am Empfänger eintrifft.

7. Ortungsvorrichtung nach einem der vorstehenden Ansprüche, **dadurch gekennzeichnet, daß** die Entfernung in der die Sender- und Empfängerachse den Boden oder eine Stoppeloberfläche trifft etwa 4 bis 6 m beträgt.

8. Ortungsvorrichtung nach einem der vorstehenden Ansprüche, **dadurch gekennzeichnet, daß** die beiden Teilortungsvorrichtungen (OV1, OV2) in einem Gehäuse (GH) eingebaut sind, das mit einer Schelle (SC) an einem horizontalen, quer zur Sender-Empfängerachse gerichteten Halterohr (HR) lösbar, neigungsverstellbar befestigt ist.

9. Ortungsvorrichtung nach einem der vorstehenden Ansprüche, **dadurch gekennzeichnet, daß** die beiden Sender der Teilortungsvorrichtungen (OV1, OV2) gleichzeitig mit einem Sendeimpuls angesteuert sind und die beiden Empfänger demgemäß jeweils von den beiden Sendern kommende vom unbearbeiteten Feld (GF) reflektierte Teilempfangssignale (OS1, OS2) überlagert aufnehmen.

10. Ortungsvorrichtung nach einem der vorstehenden Ansprüche, **dadurch gekennzeichnet, daß** sie bei geradeausgestellter Landmaschine (1) so ausgerichtet und seitlich von der Bearbeitungskante (GK) und höhenmäßig so angeordnet ist, daß das Reflexionsgebiet (RG1) der ersten Teilortungsvorrichtung (OV1) etwa an der Bearbeitungskante (GK) endet.

11. Ortungsvorrichtung nach einem der vorstehenden Ansprüche, **dadurch gekennzeichnet, daß** die Reflexionsgebiete (RG1, RG2) auf dem unbearbeiteten Feld der beiden Teilortungsvorrichtungen (OV1, OV2) bis zu etwa 50% überlappt sind.

12. Ortungsvorrichtung nach einem der vorstehenden Ansprüche, **dadurch gekennzeichnet, daß** die Teilempfangssignale (OS1, OS2), die von dem unbearbeiteten Feld stammen, in einem zugehörigen Zeitfenster (T1) jeweils integriert werden und die Integralwerte zu weiteren Auswertung vorgehalten werden.

13. Ortungsvorrichtung nach Anspruch 12, **dadurch gekennzeichnet, daß** das zweite integrierte
Teilempfangssignal (OS2) durch Vergleicher (V1, V2) darauf überprüft wird, ob es relativ zum integrierten Teilempfangssignal (OS2) eine Obergrenze (OG) überschreitet oder eine Untergrenze (UG) unterschreitet, und bei einer Überschreitung oder einer Unterschreitung die entsprechenden Lenkstellgrößen (LSG) erzeugt werden.

14. Ortungvorrichtung nach Anspruch 13, **dadurch gekennzeichnet, daß** den Vergleichern (V1, V2) ein Radwinkelsignal (RWS) eines Lenkstellungssensors (LSS) eines vermittels der Lenkstellgröße (LSG) gelenkten Rades (HR) relativ zum ersten integrierten Teilempfangssignal (OS2) kompensatorisch gerichtet summiert zugeführt ist.

15. Ortungsvorrichtung nach einem der Ansprüche 13 oder 14, **dadurch gekennzeichnet, daß** die Überschreitung der Obergrenze (OG) und die Unterschreitung der Untergrenze (UG) als Links- bzw. Rechtslenksignale (SHL, SHR) jeweils einem elektromagnetisch gesteuerten Hydraulikventil (LV, RV) zugeführt sind, deren Hydraulikleitungen mit einer jeweils zugehörigen Seit eines Hydraulik-Lenkzylinders (LH) verbunden sind, dessen Kolben mit einem Lenkgestänge verbunden ist.

## Claims

1. A position-finding device (OV) for a working edge, in particular a crop material edge (GK), whose position-finding signal is supplied as a steering control value (LSG) to an electrically controlled steering arrangement (RV, LV, LH) of an agricultural machine, comprising a first partial position-finding device (OV1) which comprises a transmitter and a receiver and whose reflection zone (RG1) is disposed substantially on the field (GF) which has not yet been worked and in particular not harvested, and comprising a second partial position-finding device (OV2) which comprises a further transmitter and a further receiver and whose other reflection zone (RG2, RG2*) is oriented to overlap the working edge (GK) on both sides, wherein the reception signal (OS2) of the second partial position-finding device (OV2) relationally and standardisingly linked to the reception signal (OS1) of the first partial position-finding device (OV1) serves to produce said steering control value (LSG),
**characterised in that** the two reflection zones (RG1, RG2) of the two partial position-finding devices (OV1, OV2) partially overlap.

2. A position-finding device according to claim 1 **characterised in that** the two partial position-finding devices (OV1, OV2) are arranged in closely mutually juxtaposed relationship diverging by about 5° horizontally and they have a 50% reception intensity range with an aperture angle of about 7°.

3. A position-finding device according to one of the preceding claims **characterised in that** it is arranged on a holding arm (HA) with a pivotal arm (SA) adjustably in respect of height at the front of the working apparatus, in particular a cutting mechanism (MW).

4. A position-finding device according to claim 3 **characterised in that** a motorised height adjusting device (HSV) is arranged on the pivotal arm (SA).

5. A position-finding device according to claim 2 or claim 3 **characterised in that** it is fixed by means of a four-bar linkage assembly (SA, OL, UL, VG) to the pivotal arm (SA) and the holding arm (HA), whose members (SA, VG) are of a different length such that the position-finding device (OV) is directed downwardly more steeply, the higher it is set.

6. A position-finding device according to claim 5 **characterised in that** in an adjustment in respect of height it is always approximately so inclined that the transmitter and receiver axis meets the crop material at approximately the same distance (AE) and an echo from there reaches the receiver at a marked distance in time in relation to a later echo from the low reflection zone (RG2*).

7. A position-finding device according to one of the preceding claims **characterised in that** the distance at which the transmitter and receiver axis meets the ground or a stubble surface is about 4 to 6 m.

8. A position-finding device according to one of the preceding claims **characterised in that** the two partial position-finding devices (OV1, OV2) are installed in a housing (GH) which is fixed releasably and adjustably in inclination with a clamp (SC) to a horizontal holding tube (HR) directed transversely with respect to the transmitter-receiver axis.

9. A position-finding device according to one of the preceding claims **characterised in that** the two transmitters of the partial position-finding devices (OV1, OV2) are actuated simultaneously with a transmission pulse and the two receivers accordingly respectively receive in superposed relationship partial reception signals (OS1, OS2) coming from the two transmitters and reflected by the unworked field (GF).

10. A position-finding device according to one of the preceding claims **characterised in that** when the agricultural machine (1) is set straight ahead the position-finding device is so oriented and is arranged laterally from the working edge (GK) and in respect of height such that the reflection zone (RG1) of the first partial position-finding device (OV1) terminates approximately at the working edge (GK).

11. A position-finding device according to one of the preceding claims **characterised in that** the reflection zones (RG1, RG2) overlap by up to about 50% on the unworked field of the two partial position-finding devices (OV1, OV2).

12. A position-finding device according to one of the preceding claims **characterised in that** the partial reception signals (OS1, OS2) which originate from the unworked field are respectively integrated in an associated time window (T1) and the integral values are stored for further evaluation.

13. A position-finding device according to claim 12 **characterised in that** the second integrated partial reception signal (OS2) is checked by comparators (V1, V2) for whether it is above an upper limit (OG) or is below a lower limit (UG) relative to the integrated partial reception signal (OS2) and the corresponding steering control values (LSG) are produced when the signal is above the upper limit or below the lower limit.

14. A position-finding device according claim 13 **characterised in that** a wheel angle signal (RWS) of a steering position sensor (LSS) of a wheel (HR) steered by means of the steering control value (LSG) is fed to the comparators (V1, V2) summed in compensatingly directed relationship relative to the first integrated partial reception signal (OS2).

15. A position-finding device according to one of claims 13 and 14 **characterised in that** the fact of exceeding the upper limit (OG) and falling below the lower limit (UG) are respectively fed as left-hand and right-hand steering signals (SHL, SHR) to a respective electromagnetically controlled hydraulic valve (LV, RV) whose hydraulic lines are connected to a respectively associated side of a hydraulic steering cylinder (LH) whose piston is connected to a steering linkage.

## Revendications

1. Dispositif de repérage (OV) d'un bord de travail, plus particulièrement d'un bord de produit à récolter (GK), dont le signal de repérage est transmis en tant que grandeur de réglage de direction (LSG) à un système de direction (RV, LV, LH) à commande électrique d'une machine agricole, comportant un premier dispositif de repérage élémentaire (OV1) comprenant un émetteur et un récepteur, dont la zone de réflexion (RG1) est majoritairement située dans le champ (GF) qui n'a pas encore été travaillé, notamment non récolté, ainsi qu'un second dispositif de repérage élémentaire (OV2) comprenant un second émetteur et un second récepteur, dont la zone de réflexion (RG2, RG2*) distincte est située de part et d'autre du bord de travail (GK) avec chevauchement, le signal de réception (OS2) du deuxième dispositif de repérage élémentaire (OV2) étant combiné du point de vue de la référence et en effectuant une normation au signal de réception (OS1) du premier dispositif de repérage élémentaire (OV1) aux fins de produire la grandeur de réglage de direction (LSG), **caractérisé par le fait que** les deux zones de réflexion (RG1, RG2) des deux dispositifs de repérage élémentaires (OV1, OV2) se chevauchent partiellement.

2. Dispositif de repérage selon la revendication 1, **caractérisé par le fait que** les deux dispositifs de repérage élémentaires (OV1, OV2) sont disposés l'un à côté de l'autre avec une divergence dans le plan horizontal d'environ 5° et qu'ils présentent une zone à intensité de réception 50% dont l'angle d'ouverture est d'environ 7°.

3. Dispositif de repérage selon une des revendications précédentes, **caractérisé par le fait qu'**il est disposé sur un bras de support (HA) comportant un bras oscillant (SA), avec possibilité de réglage en hauteur, côté frontal de l'outil de travail, notamment d'une faucheuse (MW).

4. Dispositif de repérage selon la revendication 3, **caractérisé par le fait qu'**un dispositif motorisé de réglage de hauteur (HSV) est disposé sur le bras oscillant (SA).

5. Dispositif de repérage selon la revendication 2 ou 3, **caractérisé par le fait qu'**il est fixé au bras oscillant (SA) et au bras de support (HA) par l'intermédiaire d'un parallélogramme articulé (SA, OL, UL, VG), dont les éléments (SA, VG) ont une longueur différente telle, que plus le dispositif de repérage (OV) est positionné haut plus celui-ci plonge à-pic vers le bas.

6. Dispositif de repérage selon la revendication 5, **caractérisé par le fait que** celui-ci, lors d'un réglage de hauteur est toujours incliné approximativement de telle sorte que l'axe d'émetteur - récepteur atteigne le produit de récolte (AE) approximativement à la même distance et qu'un écho de ce point soit nettement décalé dans le temps par rapport à un écho de la zone de réflexion (RG2*) éloignée.

7. Dispositif de repérage selon une des revendications précédentes, **caractérisé par le fait que** la distance à laquelle l'axe d'émetteur - récepteur atteint le sol ou une surface de chaumes est comprise entre environ 4 et 6 m.

8. Dispositif de repérage selon une des revendications précédentes, **caractérisé par le fait que** les deux dispositifs de repérage élémentaires (OV1, OV2) sont montés dans un boîtier (GH) qui est fixé de manière démontable et avec possibilité de réglage en inclinaison au moyen d'un collier (SC) à un tube de support (HR) horizontal orienté transversalement à l'axe d'émetteur - récepteur.

9. Dispositif de repérage selon une des revendications précédentes, **caractérisé par le fait que** les deux émetteurs des dispositifs de repérage élémentaires (OV1, OV2) sont activés simultanément avec une impulsion d'émission et les deux récepteurs enregistrent avec un chevauchement, pour les deux émetteurs, des signaux de réception élémentaires (OS1. OS2) réfléchis par le champ (GF) non travaillé.

10. Dispositif de repérage selon une des revendications précédentes, **caractérisé par le fait que** celui-ci, lorsque la machine agricole est positionnée en ligne droite, est orienté et positionné en hauteur et latéralement par rapport au bord de travail (GK), de telle sorte que la zone de réflexion (RG1) du premier dispositif de repérage élémentaire (OV1) se termine sensiblement sur le bord de travail (GK).

11. Dispositif de repérage selon une des revendications précédentes, **caractérisé par le fait que** les zones de réflexion (RG1, RG2) des deux dispositifs de repérage (OV1, OV2) dans le champ non travaillé se chevauchent d'environ 50%.

12. Dispositif de repérage selon une des revendications précédentes, **caractérisé par le fait que** les signaux de repérage élémentaires (OS1, OS2) qui proviennent du champ non travaillé sont intégrés dans une fenêtre de temps (T1) correspondante et que les valeurs d'intégrales sont tenues à disposition pour un traitement ultérieur.

13. Dispositif de repérage selon la revendication 12, **caractérisé par le fait que** des comparateurs (V1, V2) examinent si le deuxième signal de repérage élémentaire (OS2) intégré, par rapport au signal de repérage élémentaire (OS2) intégré dépasse une limite supérieure (OG) ou inférieure (UG) et en cas de dépassement génèrent les grandeurs de réglage de direction (LSG) correspondantes.

14. Dispositif de repérage selon la revendication 13, **caractérisé par le fait qu'**un signal d'angle de roue (RWS) délivré par un capteur de position de direction (LSS) pour une roue (HR) orientée à l'aide de la grandeur de réglage de direction (LSG) est transmis aux comparateurs (V1, V2) redressé par compensation par rapport au premier signal de repérage élémentaire (OS1) intégré.

15. Dispositif de repérage selon une des revendications 13 ou 14, **caractérisé par le fait que** le dépassement de la limite supérieure (OG) et le dépassement de la limite inférieure (UG) sont transmis sous forme de signaux de braquage à gauche ou de braquage à droite (SHL, SHR)à une vanne hydraulique (LV, RV) à commande électromagnétique, dont les conduites hydrauliques sont reliées à un côté correspondant d'un vérin hydraulique de direction (LH), dont le piston est couplé à une tringlerie de direction.
